Europäisches Patentamt

European Patent Office

Office européen des brevets

(19)

(11) Veröffentlichungsnummer: **0 009 170**
**B1**

(12) **EUROPÄISCHE PATENTSCHRIFT**

(45) Veröffentlichungstag der Patentschrift :
19.08.81

(21) Anmeldenummer : 79103284.0

(22) Anmeldetag : 05.09.79

(51) Int. Cl.³ : **C 08 F222/06** // (C08F222/06,
210/14, 210/14)

(54) Terpolymere mit 50 Mol % Gehalt an Maleinsäureanhydrid sowie Verfahren zu ihrer Herstellung.

(30) Priorität : 18.09.78 DE 2840502

(43) Veröffentlichungstag der Anmeldung :
02.04.80 (Patentblatt 80/07)

(45) Bekanntmachung des Hinweises auf die Patenterteilung : 19.08.81 Patentblatt 81/33

(84) Benannte Vertragsstaaten :
AT BE CH DE FR GB IT NL SE

(56) Entgegenhaltungen :
DE - A - 1 520 120
FR - A - 1 496 447
FR - A - 2 091 015

(73) Patentinhaber : BASF Aktiengesellschaft
Carl-Bosch-Strasse 38
D-6700 Ludwigshafen (DE)

(72) Erfinder : Denzinger, Walter
Wormer Landstrasse 65
D-6720 Speyer (DE)
Erfinder : Cordes, Claus, Dr., Dipl.-Chem.
Halbergstrasse 13
D-6719 Weisenheim (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Terpolymere mit 50 Mol % Gehalt an Maleinsäureanhydrid sowie Verfahren zu ihrer Herstellung

Die Erfindung betrifft Terpolymere aus Maleinsäureanhydrid — im folgenden auch «MSA genannt» —, 2,4,4'-Trimethylpenten-1 und 2,4,-4'-Trimethylpenten-2.

Es ist bekannt, Copolymere aus Maleinsäureanhydrid mit 1-Olefinen durch Block, Lösungs-, Fällungs- und Suspensionspolymerisation mit radikalischen Initiatoren herzustellen. So lehrt die US-PS 2 378 629 die Herstellung von Copolymeren des Maleinsäureanhydrids mit 1-Olefinen, gegebenenfalls auch mit einem 1-Olefinüberschuß durch Polymerisation im Block oder auch in Lösung. Weiter ist aus der US-PS 2 430 313 bekannt, Copolymere aus Maleinsäureanhydrid und 1-Olefinen durch Fällungspolymerisation in einem inerten Lösungsmittel herzustellen. Die US-PS 3 729 451 beschreibt die Dispersionspolymerisation von 1-Olefinen mit 4 bis 14 C-Atomen und Maleinsäureanhydrid in überschüssig eingesetztem 1-Olefin in Gegenwart von Copolymerisaten aus Maleinsäureanhydrid und 1 Olefinen mit 14 bis 18 C-Atomen als Dispergator, und die DT-OS 2 501 123 schlägt die Suspensionspolymerisation von Maleinsäureanhydrid und 1-Olefinen mit 2 bis 8 C-Atomen in Gegenwart von speziellen Dispergatoren, wie den Halbestern und/oder Halbamiden der Copolymeren mit höheren Alkoholen oder höheren Aminen vor.

Aus «Die Angewandte Makromolekulare Chemie» 69, (1978) 141 bis 156, insbesondere Seiten 153 und 154, ist bekannt, aus MSA und einem Überschuß an einem Diisobutylengemisch, das zu ca. 75 Gew.% 2,4,4'-Trimethylpenten-1 und zu ca. 25 Gew.% 2,4,4'-Trimethylpenten-2 besteht, Copolymere herzustellen.

Diese Verfahren führen aber nur zu Copolymerisaten, die MSA und 2,4,4'-Trimethylpenten-1-Einheiten enthalten.

Diese Ergebnisse geben durchaus konform mit den bisherigen Erkenntnissen, wonach 2-Olefine, insbesondere 2,4,4'-Trimethylpenten-2 mit MSA nicht oder in nur sehr untergeordnetem Maße unter den Bedingungen einer radikalischen Polymerisation copolymerisieren.

Das Ziel der vorliegenden Erfindung bestand darin, auch solche Copolymerisate des MSA herzustellen, die 2,4,4'-Trimethylpenten-2 als Monomereinheiten einpolymerisiert enthalten, da ein Bedürfnis bestand, auch dieses 2-Isomere wirtschaftlich zu verwerten.

Erfindungsgemäß wurden in überraschender Weise Terpolymere des MSA, 2,4,4'-Trimethylpenten-1 und 2,4,4'-Trimethylpenten-2 erhalten. Es handelt sich um Terpolymere mit K-Werten nach Fikentscher von 8 bis 100, bestehend aus 50 Molprozent Maleinsäureanhydrid-, 35 bis 45 Molprozent 2,4,4'-Trimethylpenten-1- und 5 bis 15 Molprozent 2,4,4'-Trimethylpenten-2-Einheiten. Man erhält sie dadurch, daß man 50 Gewichtsteile Maleinsäureanhydrid, 35 bis 180 Gewichtsteile 2,4,4'-Trimethylpenten-1 und die 0,6 bis 6-fache Gewichtsmenge, bezogen auf 2,4,4'-Trimethylpenten-1, an 2,4,4'-Trimethylpenten-2 in Gegenwart von radikalbildenden Initiatoren bei Temperaturen von 60 bis 200 °C und Drücken von 1 bis 20 bar polymerisiert und das Terpolymer von den nicht umgesetzten Monomeren abtrennt.

Dieses Ergebnis bedeutet die Überwindung eines ausgesprochenen technischen Vorurteils, nachdem insbesondere aus der Angewandten Makromolekularen Chemie loc. cit. ein ähnliches Verfahren bekannt war, wonach lediglich eine andere prozentuale Monomerenzusammensetzung und spezielle Dispergatoren empfohlen werden, und gemäß dem nur die 1-Olefin-Einheiten einpolymerisiert werden.

Mit den neuen Terpolymeren wird die Technik insofern bereichert, als hinsichtlich der anwendungstechnischen Eigenschaften der Polymerisate den bisherigen 1-Olefincopolymerisaten gleichwertige Produkte erhalten werden.

Die Ausgangsmonomeren sind neben MSA Diisobutylengemische, die aus 2,4,4'-Trimethylpenten-1 und der 0,6 bis 6-fachen, vorzugsweise 0,7 bis 4-fachen Menge, bezogen auf 2,4,4'-Trimethylpenten-1, an 2,4,4'-Trimethylpenten-2 bestehen.

Die Copolymerisation kann nach dem Schema einer Block- oder einer Suspensionspolymerisation, durchgeführt werden.

Bei der letzteren wird das Diisobutylengemisch gegenüber dem MSA in einem Überschuß eingesetzt. Im erfindungsgemäßen Sinne wählt man dann, bezogen auf 50 Gewichtsteile MSA, 35 bis 180, vorzugsweise 50 bis 150, Gewichtsteile 2,4,4'-Trimethylpenten-1 und die 0,6 bis 6-fache, vorzugsweise die 0,7 bis 4-fachen Menge an 2,4,4'-Trimethylpenten-2, mit der Maßgabe, daß das gesamte Diisobutylengemisch gegenüber MSA in einem gewichtsmäßigen Überschuß vorliegt.

Bei der Suspensionspolymerisation ist es zweckmäßig, geeignete Dispergatoren mitzuverwenden. Als vorteilhaft haben sich hierbei Polyalkylvinyläther mit 1 bis 20 C-Atomen pro Alkylgruppe erwiesen.

Als Radikalbildner kommen übliche organische radikalbildende Initiatoren, wie Dialkylperoxide, Alkylhydroperoxide, Diacylperoxide, Ketonperoxide, Azoverbindungen und auch Redoxinitiatorsysteme in Frage. Beispielsweise seien genannt: Di-tertiär-butylperoxid, Dicumylperoxid, tert.-Butylhydroperoxid, Cumolhydroperoxid, tert.-Butylperpivalat, tert.-Butylperoktoat, tert.-Butylperbenzoat, Lauroylperoxid, Benzoylperoxid, Acetylcyclohexansulfonylperoxid, Isopropylperkarbonat, Methyläthylperoxid, Acetylacetonperoxid, Azodiisobuttersäuredinitril, Azodicarbonimid, Azodicarbonsäuremethyl- oder -äthylester.

Die in Betracht kommende Katalysatormenge liegt üblicherweise zwischen 0,01 und 5 %, bevorzugt 0,1 bis 2 %, berechnet auf das entstehende Terpolymere.

Als Dispergatoren — auch Schutzkolloide genannt — für die Suspensionspolymerisation sind Polyalkylvinyläther mit 1 bis 20 C-Atomen in der Alkylkette und K-Werten von 20 bis 100, vorzugsweise 40 bis 80, besonders geeignet. Beispielsweise seien genannt: Polymethylvinyläther, Polyäthylvinyläther, Polybutylvinyläther, Polyisobutylvinyläther, Polydodecylvinyläther, Polyoktadecylvinyläther und ihre Mischungen, wobei Polyäthylvinyläther und Polyoktadecylvinyläther besonders bevorzugt sind. Das Schutzkolloid wird meistens in Mengen von 0,01 bis 5 %, vorzugsweise 0,1 bis 2 %, berechnet auf das Terpolymere eingesetzt.

Die Polymerisation kann diskontinuierlich oder kontinuierlich bei Temperaturen von 60 bis 200 °C, vorzugsweise 80 bis 150 °C, und Drücken von 1 bis 20 bar, vorzugsweise 1 bis 10 bar, durchgeführt werden.

Bei der Polymerisation kann auch in Gegenwart von üblichen, die Molekülgröße beeinflussenden Verbindungen wie regelnde Stoffe, wie beispielsweise Dodecylmerkaptan, Thiophenol, Butyraldehyd, Cyclohexen sowie Verbindungen zur Kettenverlängerung mit 2 oder mehr polymerisierbaren Gruppen im Molekül, wie zum Beispiel Butandioldivinyläther, Butandioldiacrylat, Vinylacrylat, Divinylbenzol, Divinyldioxan, Pentaerithritriallyläther, Polyallylsucrose gearbeitet werden. Die in Betracht kommende Menge an regelnder oder kettenverlängernder Verbindung liegt zwischen 0,01 und 5 %, vorzugsweise 0,1 bis 2,0 %, berechnet auf das entstehende Terpolymere.

Zur Durchführung der Polymerisation sind die üblichen Rührapparaturen geeignet, wobei Rührapparate mit Blatt- oder Impellerrührer für Suspensionspolymerisation besonders geeignet sind. Die Rührgeschwindigkeit ist so zu wählen, daß das in dem Gemisch aus 2,4,4'-Trimethylpenten-1 und 2,4,4'-Trimethylpenten-2 unlösliche Maleinsäureanhydrid äußerst fein suspendiert ist.

Die entstehenden Polymerisatsuspensionen sind je nach Feststoffgehalt dünn bis leicht viskos und enthalten kugelförmige Polymerisatteilchen von 0,5 bis 10 μm Durchmesser. Eine wirtschaftliche Abtrennung der Terpolymeren von den nicht umgesetzten Monomeren kann zweckmäßig durch Sprühtrocknung erfolgen, jedoch lassen sich die feinen Teilchen auch problemlos abfiltrieren und dann in üblichen Trocknern, wie z.B. Schaufeltrocknern trocknen. Besonders geeignet sind die Polymerisatsuspensionen zur direkten Überführung der Copolymeren in wäßrige Alkali- oder Ammoniumsalzlösungen. Dabei wird die Polymerisatsuspension mit Wasser versetzt; durch Einleiten von Wasserdampf werden die nichtumgesetzten Monomeren abbestilliert und dann mit wäßrigem Ammoniak und/oder Alkali neutralisiert.

Die abdestillierten, nicht umgesetzten Monomeren können nach Phasentrennung vom Wasser, bevorzugt ohne weitere Reinigung, in die nächste Polymerisation eingesetzt werden. Zur

Einstellung der erfindungsgemäßen Konzentrationen müssen dabei außer Maleinsäureanhydrid auch das bei der vorigen Polymerisation verbrauchte 2,4,4'-Trimethylpenten-1 und 2,4,4'-Trimethylpenten-2 ergänzt werden. In der Regel ist dabei die zuzusetzende Menge an 2,4,4'-Trimethylpenten-1 größer als die zuzusetzende Menge an 2,4,4'-Trimethylpenten-2. Zweckmäßigerweise werden Gemische aus etwa 20 bis 30 Gewichtsteilen 2,4,4'-Trimethylpenten-2 und etwa 70 bis 80 Gewichtsteilen 2,4,4'-Trimethylpenten-1 zugesetzt.

Zur Herstellung von niedermolekularen Produkten ist andererseits die Substanzpolymerisation besonders geeignet. Diese muß im Gegensatz zur Suspensionspolymerisation so durchgeführt werden, daß MSA und Diisobutylengemisch in äquimolaren Verhältnissen oder bei sehr geringem Diisobutylenüberschuß eingesetzt werden. Das Terpolymere fällt dabei bei 180 bis 200 °C als Schmelze an. Das geschmolzene Polymere wird nach bekannten Methoden aus dem Reaktor ausgetragen und nach Abkühlen und Erstarren gemahlen. In einer bevorzugten Ausführungsform wird der heißen Schmelze wäßriges Alkali und/oder Ammoniakwasser unter Druck zugesetzt und dabei die direkt einsetzbare wäßrige Salzlösung erhalten.

Die erfindungsgemäßen Terpolymeren enthalten 50 Molprozent Maleinsäureanhydrid, 5 bis 15 Molprozent 2,4,4'-Trimethylpenten-2 und 35 bis 45 Molprozent 2,4,4'-Trimethylpenten-1 und besitzen K-Werte von 8 bis 100, vorzugsweise 10 bis 60. Die erfindungsgemäß erhaltenen Polymerisate können in Form der Anhydride als reaktive Komponenten z.B. für den Lacksektor oder in Form ihres Alkali- und/oder Ammoniumsalze als Dispergiermittel für Pigmente, Papierleimungsmittel, Überzugsmittel für Papier, Holz, Lacken und dergleichen Verwendung finden.

Die folgenden Beispiele erläutern die Erfindung. Angegebene Teile sind Gewichtsteile. Die K-Werte wurden nach H. Fikentscher, Celulose-Chemie 13, Seiten 58 bis 64 und 71 bis 94 (1932) bestimmt. Die Messungen erfolgten bei 25 °C in 1 % Cyclohexanonlösung.

Beispiel 1

In einem 2 Liter-Glasrührautoklaven werden 600 Teile eines Gemisches aus 60 Gew.% 2,4,4'-Trimethylpenten-1 und 40 Gew.% 2,4,4'-Trimethylpenten-2 und 1,4-Teile einer 70 %igen Lösung eines Polyäthylvinyläthers vom K-Wert 50 in Toluol eingefüllt und die Mischung auf 102 °C bis zum schwachen Sieden erhitzt. Nun werden innerhalb 3 Std. gleichmäßig 196 Teile Maleinsäureanhydrid in flüssiger Form und eine Lösung von 8,4 Teilen Tertiärbutylperoktoat in 40 Teilen eines Gemisches aus 60 Gew.% 2,4,4'-Trimethylpenten-1 und 40 Gew.% 2,4,4'-Trimethylpenten-2 zugefahren und anschließend noch 1 Std. bei 102 °C nacherhitzt. Dann werden der Suspension aus 3 bis 6 μm großen Polymerisatteilchen 600 Teile dest. Wasser zugesetzt und durch Einleiten von Wasserdampf das überschüssige Olefingemisch abdestilliert und so lange destilliert bis die Brüdentemperatur 99 °C beträgt. Die wäßrige Polymerisatsuspension wird in einem Sprühtrockner getrocknet. Der K-Wert des Polymeren beträgt 24,5. Der Gehalt an 2,4,4'-Trimethylpenten-2 beträgt nach der $^{13}$C-NMR-Analyse 9 bis 10 Molprozent.

Das abdestillierte Olefingemisch wird nach Phasentrennung vom Wasser abgetrennt und für den nächsten Polymerisationsansatz eingesetzt.

Beispiel 2

In einem 2 Liter-Glasrührautoklaven werden 357 Teile des von Beispiel 1 anfallenden Rückolefins (Zusammensetzung : 49 Gew.% 2,4,4'-Trimethylpenten-1 und 47 Gew.% 2,4,4'-Trimethylpenten-2) und 243 Teile eines Gemisches von 80 Gew.% 2,4,4'-Trimethylpenten-1 und 20 Gew.% 2,4,4'-methylpenten-2 und 1,4 Teile einer 70%igen Lösung eines Polyäthylvinyläthers vom K-Wert 50 in Toluol eingefüllt und wie bie Beispiel 1 polymerisiert und aufgearbeitet. Das Terpolymere besitzt einen K-Wert von 24 und der 2,4,4'-Trimethylpenten-2-Gehalt beträgt 9 bis 10 Molprozent.

Beispiel 3

In einem 6 Liter-Normstahlkessel mit Blattrührer werden 1 820 Teile eines Gemisches von 49 % 2,4,4'-Trimethylpenten-1 und 51 % 2,4,4'-Trimethylpenten-2 und 6 Teile eines Polyoktodecylvinyläthers vom K-Wert 40 eingefüllt und der Kessel druckdicht verschlossen. Nun wird durch 3 maliges Aufpressen von 5 bar Stickstoff und wieder Entspannen der Ansatz von Luftsauerstoff befreit. Anschließend wird unter Rühren bei 170 Upm auf 140 °C erhitzt, wobei sich ein Druck von 4 bar einstellt, und innerhalb 2 Std. 600 Teile auf 70 °C erhitztes Maleinsäureanhydrid und innerhalb 3 Std. eine Lösung von 24 Teilen Ditertiärbutylperoxid in 150 Teilen obigen Olefingemisches zudosiert. Anschließend wird nach 2 Std. nacherhitzt. Das Polymere besitzt einen K-Wert von 21 und enthält ca. 12 Molprozent 2,4,4'-Trimethylpenten-2.

Beispiel 4

In einem 6 Liter-Normstahlkessel mit Ankerrührer werden 1 870 Teile eines Gemisches von 40 Gew.% 2,4,4'-Trimethylpenten-1 und 60 Gew.% 2,4,4'-Trimethylpenten-2 und 79 Teile Maleinsäureanhydrid eingefüllt und der Kessel druckdicht verschlossen. Nun werden durch 3 maliges Aufpressen von 5 bar Stickstoff und wieder Entspannen der Ansatz vom Luftsauerstoff befreit und der Kesselinhalt auf 180 °C erhitzt, wobei sich ein Druck von 8 bar einstellt. Dann werden 1 497 Teile Maleinsäureanhydrid flüssig von 70 °C innerhalb 2 Std. und eine Lösung von 100 Teilen Ditertiärbutylperoxid in 150 Teilen eines Gemisches von 40 Gew.% 2,4,4'-Trimethylpenten-1 und 60 Gew.% 2,4,4'-Trimethylpenten-2 zudosiert. Anschließend wird noch 2 Std. bei 180 °C nacherhitzt und dann das nichtumgesetzte Olefin abdestilliert. Die flüssige Schmelze des Terpolymeren wird dann auf ein gekühltes Blech entleert. Der K-Wert des Polymeren beträgt 9 und der Gehalt von 2,4,4'-Trimethylpenten-2 14 bis 15 Molprozent.

## Ansprüche

1. Terpolymere mit K-Werten nach Fikentscher von 8 bis 100, bestehend aus 50 Molprozent Maleinsäureanhydrid-, 35 bis 45 Molprozent 2,4,4'-Trimethylpenten-1- und 5 bis 15 Molprozent 2,4,4'-Trimethylpenten-2-Einheiten.

2. Verfahren zur Herstellung von Terpolymeren gemäß Anspruch 1, *dadurch gekennzeichnet,* daß man 50 Gewichtsteile Maleinsäureanhydrid, 35 bis 180 Gewichtsteile 2,4,4'-Trimethylpenten-1 und die 0,6 bis 6-fache Gewichtsmenge, bezogen auf 2,4,4'-Trimethylpenten-1, an 2,4,4'-Trimethylpenten-2 in Gegenwart von radikalbildenden Initiatoren bei Temperaturen von 60 bis 200 °C und Drücken von 1 bis 20 bar polymerisiert und das Terpolymer von den nicht umgesetzten Monomeren abtrennt.

3. Verfahren nach Anspruch 2, *dadurch gekennzeichnet,* daß man die nicht umgesetzten Alkene in erneute Polymerisationsprozesse unter Ergänzung der bei der vorigen Polymerisation verbrauchten Monomeren einsetzt.

## Claims

1. A terpolymer which has a Fikentscher K-value of from 8 to 100 and which comprises 50 mole percent of maleic anhydride units, from 35 to 45 mole percent of 2,4,4'-trimethylpent-1-ene units and from 5 to 15 mole percent of 2,4,4'-trimethylpent-2-ene units.

2. A process for the preparation of a terpolymer as claimed in claim 1, *characterized in that* 50 parts by weight of maleic anhydride, from 35 to 180 parts by weight of 2,4,4'-trimethylpent-1-ene and from 0.6 to 6 parts by weight of 2,4,4'-trimethylpent-2-ene per part by weight of 2,4,4'-trimethylpent-1-ene are polymerized in the presence of a free radical initiator at a temperature of from 60 ° to 200 °C and a pressure of from 1 to 20 bar, and the terpolymer is separated from the unreacted monomers.

3. A process as claimed in claim 2, *characterized in that* the unreacted alkenes are employed in subsequent polymerization processes, with the addition of monomers to replace the monomers consumed in the preceding polymerization.

## Revendications

1. Terpolymères, possédant une valeur K d'après Fikentscher de 8 à 100, formés de 50 % molaires d'unités anhydride maléique, de 35 à 45 % molaires d'unités 2,4,4'-triméthyl-pentène-1 et de 5 à 15 % molaires d'unités 2,4,4'-triméthyl-pentène-2.

2. Procédé de préparation de terpolymères suivant la revendication 1, caractérisé en ce que l'on polymérise 50 parties en poids d'anhydride maléique avec 35 à 180 parties en poids de 2,4,4'-triméthyl-pentène-1 et une quantité pondérale de 2,4,4'-triméthyl-pentène-2 correspondant à 0,6 à 6 fois celle du 2,4,4'-triméthyl-pentène-1 en présence d'initiateurs formant des radicaux libres, à une température comprise entre 60 et 200 °C et sous une pression comprise entre 1 et 20 bars, puis on sépare le terpolymère formé des monomères n'ayant pas été transformés.

3. Procédé suivant la revendication 2, caractérisé en ce que l'on recycle les alcènes non transformés dans une opération de polymérisation subséquente avec compensation des monomères consommés lors de la polymérisation précédente.